# EUROPÄISCHE PATENTSCHRIFT

(11) **EP 2 392 495 B1**
(45) Veröffentlichungstag und Bekanntmachung des Hinweises auf die Patenterteilung: **05.09.2012**
(21) Anmeldenummer: 10164964.8
(22) Anmeldetag: 04.06.2010
(51) Int. Cl.: B60R 1/06

(54) **Außenrückblickspiegel mit Luftführung**
External rear view mirror with air guidance
Rétroviseur extérieur doté d'un guidage de l'air

(43) Veröffentlichungstag der Anmeldung: 07.12.2011
(73) Patentinhaber: SMR Patents S.à.r.l., 1653 Luxembourg (LU)
(72) Erfinder: Schmierer, Arne, 73230, Kirchheim (DE); Negel, Raimund, 72669, Unterensingen (DE); Herrmann, Andreas, 71364, Winnenden-Baach (DE); Szmolenszki, Istvan, 71409, Schwaikheim (DE)
(74) Vertreter: Weber-Bruls, Dorothée

(56) Entgegenhaltungen:
- DE-A1- 10 351 857
- DE-A1-102005 031 078
- DE-A1-102005 047 189
- DE-C2- 19 743 107

## Beschreibung

Die Erfindung betrifft ein Außenrückblickspiegelgehäuse mit mehreren Gehäuseteilen, einen Außenrückblickspiegel sowie eine Außenrückblickspiegelanordnung, bei denen die Gehäuseteile das Spiegelglas umfassen.

Eine Außenrückblickspiegelanordnung für ein Kraftfahrzeug besteht beispielsweise aus einem an dem Kraftfahrzeug angeordneten Spiegelfuß, welcher mittels einer Spiegelfußabdeckung verkleidet sein kann, und einem an dem Spiegelfuß angeordneten Außenrückblickspiegel. Der Spiegelfuß kann beispielsweise als Druckgussteil aus einem den auftretenden Kräften und Momenten widerstehenden Werkstoff hergestellt sein. Der Außenrückblickspiegel umfasst ein Außenrückblickspiegelgehäuse, welches unter anderem einen dem Spiegelfuß zugeordneten Grundträger beherbergt.

Spiegelfuß und Grundträger sind dabei gelenkig miteinander verbunden, so dass der Außenrückblickspiegel gegenüber dem Spiegelfuß aus einer Betriebsstellung in eine Anklappstellung und umgekehrt um eine Gelenkachse verschwenkbar ist. Dabei können Lagermittel zwischen Spiegelfuß und Grundträger vorgesehen sein, um Verschleiß und auftretende Reibungskräfte während des Verschwenkens möglichst gering zu halten.

Der Grundträger ist vorzugsweise ebenfalls als Druckgussteil aus einem den auftretenden Kräften und Momenten widerstehenden Werkstoff hergestellt, beispielsweise aus demselben Werkstoff wie der Spiegelfuß. Auf dem Grundträger ist eine beispielsweise elektromotorisch betätigbare Verstellanordnung für ein Spiegelglas angeordnet. Die Verstellanordnung wirkt auf eine Trägerplatte ein, auf der das Spiegelglas angeordnet ist. Beispielsweise kann das Spiegelglas mittels einer Klebeverbindung auf der Trägerplatte montiert sein. Die Trägerplatte kann an der Verstellanordnung und/oder an der Grundplatte geführt und/oder gelagert sein.

Das Außenrückblickspiegelgehäuse weist auf seiner in Betriebsstellung der Fahrtrichtung des Kraftfahrzeugs abgewandten Rückseite eine Öffnung auf, durch welche hindurch das Spiegelglas sichtbar ist bzw. in welcher das Spiegelglas angeordnet ist. Um eine Verstellbarkeit des Spiegelglases zu gewährleisten, ist allseitig zwischen Spiegelglas bzw. Trägerplatte und den die Öffnung umgebenden Wandungen des Außenrückblickspiegelgehäuses ein Abstand eingehalten, so dass sich um das Spiegelglas umlaufend ein Spalt zu den die Öffnung umgebenden Wandungen des Außenrückblickspiegelgehäuses ergibt.

Der Außenrückblickspiegel kann zudem eine Wiederholblinkleuchte, ein Modul für eine Fahrassistenzvorrichtung, wie etwa eine Totwinkelüberwachung, eine Spurverlasswarnung, eine Annäherungsüberwachung, oder dergleichen, oder eine Kombination hiervon aufweisen. Alternativ oder zusätzlich kann der Außenrückblickspiegel Sensoren zur Erfassung von Fahr- und/oder Umgebungszuständen, wie beispielsweise Temperatur, Helligkeit, Verschmutzungsgrad, Beleuchtungssituation aufweisen, beispielsweise um das Spiegelglas automatisch zu beheizen oder z.B. elektrochromatisch abzublenden.

Beispielsweise um eine Montage der verschiedenen, im Inneren des Außenrückblickspiegelgehäuses beherbergten Bauteile sowie gegebenenfalls deren elektrischer Verbindungen untereinander bei einem derartigen Außenrückblickspiegel zu ermöglichen, ist das Außenrückblickspiegelgehäuse zumindest zweiteilig ausgeführt. Ein erstes Gehäuseteil bildet beispielsweise den Gehäuseboden, ein zweites Gehäuseteil beispielsweise den Gehäusedeckel. Eines der beiden Gehäuseteile umfasst die um die Öffnung für das Spiegelglas herumliegende Gehäusepartie mit den die Öffnung umgebenden Wandungen.

Ein allgemein bekanntes und bisweilen ungelöstes Problem derartiger Außenrückblickspiegel ist eine Geräuschentwicklung bei zügiger Fahrt.

Durch DE 103 51 857 A1 ist ein Außenrückblickspiegel bekannt, bei dem zur Verringerung der Geräuschentwicklung eine Unebenheit vorgesehen ist. Die Unebenheit ist in demjenigen Bereich der Außenoberfläche des Außenrückblickspiegelgehäuses angeordnet, in dem bei Anströmung in Fahrtrichtung die Außenströmung verzögert wird und in der Grenzschicht nach vorheriger Druckabnahme ein Druckanstieg folgt. Durch die Unebenheit wird ein laminar-turbulenter Umschlag der Grenzschicht erzwungen. Die nach dem Umschlag turbulente Grenzschicht hat einen stärkeren Austausch mit der Außenströmung als eine laminare Grenzschicht. Dadurch kann die turbulente Grenzschicht einem Druckanstieg ohne Ablösung länger und besser folgen, als die laminare Grenzschicht. Ferner wird die an der Rückseite bei zügiger Fahrt auftretende Ablöseblase und damit der Nachlauf verkleinert. Beide Effekte können zu einer Verminderung der Geräuschentwicklung beitragen. Nachteilig hieran ist die im Vergleich zur laminaren Grenzschicht größere Dicke der turbulenten Grenzschicht, verbunden mit einem größeren Luftwiderstand.

Durch DE 196 32 620 C1 ist ein Außenrückblickspiegel bekannt, welcher zur Verringerung der Geräuschentwicklung von Luftführungskanälen durchzogen ist, die mit einer Luftquelle verbunden sind. Die Lüftungskanäle enden auf der Rückseite des Außenrückblickspiegelgehäuses. Durch diese Maßnahme soll der an der Rückseite bei zügiger Fahrt auftretenden Ablöseblase Luft zugeführt werden, wodurch der Druck in der Ablöseblase angehoben werden soll. Durch angehobenen Druck in der Ablöseblase wird der Nachlauf des Außenrückblickspiegels verkleinert, gleichbedeutend einem verminderten Turbulenzgrad im Nachlauf. Nachteilig hieran ist die Gefahr einer zusätzlichen, fahrgeschwindigkeitsabhängigen Geräuschentwicklung der Luftführungskanäle beispielsweise durch Pfeifgeräusche.

Durch DE 197 43 107 C2 ist ein Außenrückblickspiegel bekannt, an dessen Außenrückblickspiegelgehäuse an der Unterseite vom vorderen Staupunkt aus gesehen noch vor dem Übergang bzw. der Kante zur die Öffnung für das Spiegelglas aufweisenden Rückseite eine Abrisskante ausgebildet ist. Hierdurch soll einer Verschmutzung des Spiegelglases durch Spritzwasser vorgebeugt werden.

Das Dokument DE-A-10 2005 031078 offenbart ein Außenrückblickspiegelgehäuse nach dem Oberbegriff von Anspruch 1.

Eine Aufgabe der Erfindung ist es, ein Außenrückblickspiegelgehäuse sowie einen Außenrückblickspiegel und eine Außenrückblickspiegelanordnung mit verringerter Geräuschentwicklung zur Verfügung zu stellen.

Die Aufgabe wird gelöst durch einen Außenrückblickspiegel mit Gehäuseteilen, die mindestens einen Rippe im Randbereich aufweist, der zu der das Spiegelglas umfassenden Wandung gehört.

Ein erster Gegenstand der Erfindung betrifft demnach ein Außenrückblickspiegelgehäuse eines Außenrückblickspiegels einer Außenrückblickspiegelanordnung für ein Kraftfahrzeug, welches Außenrückblickspiegelgehäuse zumindest zweiteilig ausgeführt ist und zumindest aus einem ersten Gehäuseteil und einem zweiten Gehäuseteil besteht. Das erste Gehäuseteil und das zweite Gehäuseteil grenzen entlang mindestens eines Verbindungsstoßes aneinander an. Das Außenrückblickspiegelgehäuse weist auf seiner der Fahrtrichtung des Kraftfahrzeugs abgewandten Rückseite eine Öffnung für ein Spiegelglas auf. Das zweite Gehäuseteil umfasst eine um die Öffnung für das Spiegelglas herumliegende Gehäusepartie mit die Öffnung umgebenden Wandungen.

Das erste Gehäuseteil und zumindest eine der die Öffnung umgebenden Wandungen des zweiten Gehäuseteils weisen einander zugewandte, gegenüberliegende einem Gehäuseinnenraum zugewandte Innenseiten auf. An wenigstens einer der einander zugewandten, gegenüberliegenden Innenseiten ist mindestens eine Rippe angeordnet, welche parallel zur Rückseite verläuft und sich frei von der einen Innenseite aus bis auf einen verbleibenden Spalt annähernd bis zu der gegenüberliegenden Innenseite in den Gehäuseinnenraum erstreckt. Die mindestens eine Rippe nähert sich dabei von einer der Innenseiten kommend bis auf den Spalt der gegenüberliegenden Innenseite an. Die mindestens eine Rippe kann beispielsweise als integraler Bestandteil des vorzugsweise in einem Spritzgießprozess hergestellten ersten oder zweiten Gehäuseteils ausgebildet sein.

Wichtig ist hervorzuheben, dass die Ausdrücke erstes und zweites Gehäuseteil, sowie allgemein die Begriffe erste, zweite keine Reihenfolge oder konkrete Anleitung zur Anordnung bezeichnen, sondern lediglich einer Unterscheidung dienen und beliebig austauschbar sind, wobei die Rippe in Richtung Spiegelfuß an Höhe gewinnt.

Erfindungsgemäß ist demnach vorgesehen, dass mindestens eine Rippe an wenigstens einer im Bereich der die Öffnung umgebenden Wandungen einander zugewandten gegenüberliegenden Innenseiten des ersten und/oder zweiten Gehäuseteils angeordnet ist.

Vorteile der Erfindung gegenüber dem Stand der Technik ergeben sich unter anderem dadurch, dass die mindestens eine Rippe eine Labyrinthdichtung bildet, durch welche eine Geräuschentwicklung verringert bzw. verhindert wird, welche ansonsten dadurch entsteht, dass bei Anströmung des Außenrückblickspiegelgehäuses von der der Rückseite gegenüberliegenden Vorderseite her, Luft aus der Grenzschicht durch den Verbindungsstoß zwischen erstem und zweitem Gehäuseteil hindurch via dem Spalt zwischen Spiegelglas und den dieses umgebenden Wandungen der Öffnung durch den Unterdruck in der Ablöseblase auf der Rückseite abgesaugt wird. Die beim Stand der Technik auf die beschriebene Art und Weise durch ein Außenrückblickspiegelgehäuse ungehindert hindurchströmende Luft erzeugt unerwünschte Geräusche. Die mindestens eine Rippe verhindert demnach eine Geräuschentwicklung beispielsweise durch Pfeifgeräusche, die von einer unerwünschten Durchströmung des Außenrückblickspiegelgehäuses herrühren können. Die mindestens eine Rippe dient zur gezielten Luftführung, wenn der Außenrückblickspiegel von Luft angeströmt wird.

Weitere Vorteile ergeben sich unter anderem dadurch, dass es zu keinem Kontakt zwischen Rippe und gegenüberliegender Innenseite und dadurch zu keinen möglicherweise durch Schwingungen bzw. Relativbewegungen der Gehäuseteile relativ zueinander entstehenden Vibrations-, Knarr- oder Quietschgeräuschen kommt, indem ein geringer Spalt zwischen den Innenseiten eingehalten wird. Darüber hinaus wird durch die Einhaltung des Spalts die Montage vereinfacht, da im Vergleich zu einer bis zur gegenüberliegenden Innenseite reichenden Rippe z.B. ein Übermaß der Rippe nicht unmittelbar zum Ausschuss sondern zunächst lediglich zu einer Verjüngung des Spalts führt.

Ein weiterer Vorteil ergibt sich durch eine Versteifung des entsprechenden Gehäuseteils durch die mindestens eine Rippe, wodurch Geräusche verursacht durch von der Umströmung angeregte Gehäuseschwingungen vermieden werden können.

Vorzugsweise ist mindestens eine Rippe an dem ersten Gehäuseteil angeordnet. Die mindestens eine Rippe erstreckt sich dabei wenigstens über eine mindestens einer der die Öffnung umgebenden Wandungen gegenüberliegende Partie des ersten Gehäuseteils. Indem das erste Gehäuseteil mit mindestens einer Rippe versehen ist, wird der zusätzliche Vorteil einer Versteifung des ersten Gehäuseteils im mindestens einer um die Öffnung umlaufenden Wandung gegenüberliegenden Bereich erzielt. Dadurch können Geräusche erzeugende Schwingungen des ersten Gehäuseteils gleich gar nicht entstehen bzw. werden wirkungsvoll unterdrückt.

Das erste Gehäuseteil kann an einer der mit der mindestens einen Rippe versteiften Innenwand zugeordneten Außenwand von einer Strömung mit zunehmendem Druck in der Grenzschicht umströmt sein. Beispielsweise können Unebenheiten oder wenigstens eine Abrisskante an dem ersten Gehäuseteil vorgesehen sein, um die Umströmung zur Verringerung der Geräuschentwicklung zu beeinflussen. Hierdurch kann es fahrgeschwindigkeitsabhängig zu einer dynamischen Belastung des ersten Gehäuseteils kommen, verursacht durch Turbulenzen in der entlang der Außenwand ausbildenden Grenzschicht und/oder Außenströmung. Die mindestens eine Rippe versteift das erste Gehäuseteil wirkungsvoll, so dass die dynamische Belastung keine Schwingung bzw. Vibration des ersten Gehäuseteils verursachen kann. Dadurch wird noch wirksamer eine Geräuschentwicklung vermieden bzw. verhindert.

Eine vorteilhafte Ausgestaltung der Erfindung sieht mehrere parallel zueinander versetzt angeordnete Rippen vor.

Beispielsweise können benachbarte, parallel zueinander versetzte Rippen an gegenüberliegenden Innenseiten angeordnet sein. Hierbei ist jeweils mindestens eine Rippe versetzt zueinander an den einander gegenüberliegenden Innenseiten angeordnet. Dadurch ergibt sich zum einen eine verbesserte Dichtwirkung der durch die Rippen gebildeten Labyrinthdichtung und zum anderen eine Versteifung beider die einander gegenüberliegenden Innenseiten aufweisenden Gehäusepartien des ersten und des zweiten Gehäuseteils.

Das Außenrückspiegelgehäuse kann eine Wiederholblinkleuchte beherbergen. Alternativ oder zusätzlich kann das Außenrückblickspiegelgehäuse ein Modul und/oder einen Sensor einer Fahrassistenzvorrichtung und/oder zur Steuerung einer Fahrzeugfunktion, wie beispielsweise zur Steuerung einer Beheizung und/oder automatischen Abblendung des Spiegelglases beherbergen. Bei dem Modul und/oder Sensor für eine Fahrassistenzvorrichtung kann es sich beispielsweise um ein Anzeigemodul einer Totwinkelüberwachung, eine Spurverlasswarnung oder einer Annäherungsüberwachung, einen Empfänger zur satellitengestützten Positionsbestimmung oder dergleichen, oder eine Kombination hiervon handeln. Bei der Steuerung einer Fahrzeugfunktion kann es sich beispielsweise um eine Beheizung und/oder automatische Abblendung des Spiegelglases handeln. Hierzu kann das Außenrückblickspiegelgehäuse beispielsweise einen Temperatursensor und/oder einen Helligkeitssensor beherbergen.

Das erste Gehäuseteil bildet oder umfasst vorzugsweise einen Gehäuseboden, wohingegen das zweite Gehäuseteil einen Gehäusedeckel bildet oder umfasst.

Am ersten Gehäuseteil und/oder am zweiten Gehäuseteil kann bei Anströmung von einer der Rückseite abgewandten Vorderseite des Außenrückblickspiegelgehäuses aus betrachtet vom vorderen Staupunkt aus gesehen noch vor dem Übergang bzw. der Kante zur die Öffnung für das Spiegelglas aufweisenden Rückseite eine Abrisskante ausgebildet sein. Hierdurch kann neben einer Verringerung der Geräuschentwicklung durch Verkleinerung des Nachlaufs einer Verschmutzung des Spiegelglases entgegengewirkt werden.

Alternativ oder zusätzlich kann in wenigstens einem Bereich der Außenoberfläche des Außenrückblickspiegelgehäuses mindestens eine Unebenheit vorgesehen sein, in welchem Bereich bei Anströmung von einer der Rückseite abgewandten Vorderseite des Außenrückblickspiegelgehäuses aus betrachtet die Außenströmung verzögert wird und in der Grenzschicht nach vorheriger Druckabnahme ein Druckanstieg folgt. Hierdurch wird eine zusätzliche Verringerung der Geräuschentwicklung durch Verkleinerung des Nachlaufs erzielt.

Zwischen den einander zugewandten, gegenüberliegenden Innenseiten kann zusätzlich mindestens eine Dichtung aus einem reversibel elastisch verformbaren Material, z.B. aus einem elastomeren Werkstoff, eingebracht sein, welche die Dichtwirkung der Rippe weiter verbessert. Im Gegensatz zu einer ausschließlichen Anordnung einer z.B. elastomeren Dichtung verhindert die mindestens eine Rippe z.B. ein Flattern der Dichtung bei hoher von dieser abzudichtender Druckdifferenz. Dadurch trägt die mindestens eine erfindungsgemäße Rippe auch in Kombination mit einer elastomeren Dichtung zu einer Verringerung einer unerwünschten Geräuschentwicklung bei.

Ein zweiter Gegenstand der Erfindung betrifft einen Außenrückblickspiegel umfassend ein Außenrückblickspiegelgehäuse, welches zumindest einen einem an einem Kraftfahrzeug angeordneten Spiegelfuß zugeordneten Grundträger beherbergt. Der Außenrückblickspiegel zeichnet sich durch ein zuvor beschriebenes Außenrückblickspiegelgehäuse aus.

Ein dritter Gegenstand der Erfindung betrifft eine Außenrückblickspiegelanordnung für ein Kraftfahrzeug, umfassend einen an dem Kraftfahrzeug angeordneten Spiegelfuß, der gegebenenfalls mittels einer Spiegelfußabdeckung verkleidet ist, und einem an dem Spiegelfuß angeordneten Außenrückblickspiegel. Bei dem Außenrückblickspiegel handelt es sich um einen zuvor beschriebenen Außenrückblickspiegel.

Weitere Merkmale der Erfindung ergeben sich aus den weiteren Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente.
Fig. 1 zeigt in schematischer Darstellung einen Querschnitt durch einen Teil eines Außenrückblickspiegelgehäuses.
Fig. 2 zeigt einen Blick in das untere Gehäuseteil

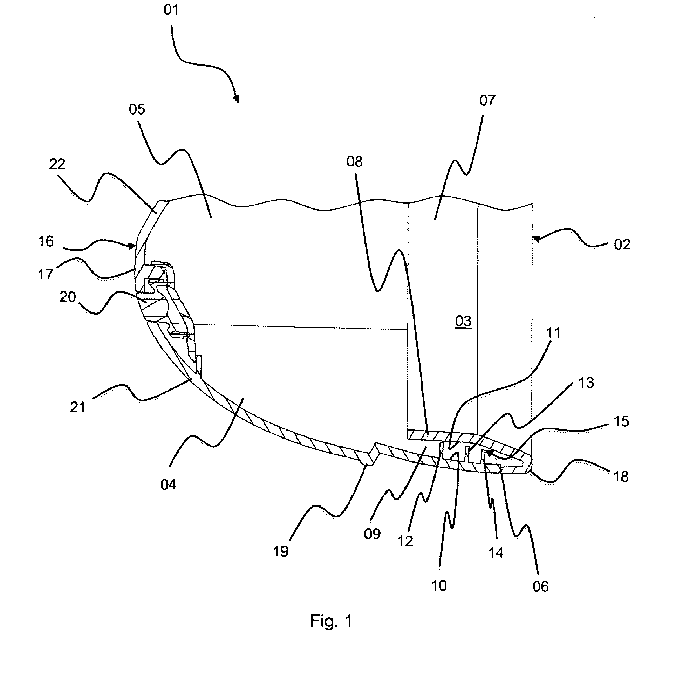

Ein in Fig. 1 zum Teil dargestelltes Außenrückblickspiegelgehäuse 01 eines Außenrückblickspiegels einer Außenrückblickspiegelanordnung für ein Kraftfahrzeug weist auf seiner der Fahrtrichtung des Kraftfahrzeugs abgewandten Rückseite 02 eine Öffnung 03 für ein nicht dargestelltes Spiegelglas auf. Das Außenrückblickspiegelgehäuse 01 ist zumindest zweiteilig ausgeführt. Das Außenrückblickspiegelgehäuse 01 besteht zumindest aus einem ersten Gehäuseteil 04 und einem zweiten Gehäuseteil 05. Das erste Gehäuseteil 04 und das zweite Gehäuseteil 05 grenzen zumindest in einem Bereich nahe der Rückseite 02 entlang wenigstens eines Verbindungsstoßes 06 aneinander an. Das zweite Gehäuseteil 05 umfasst eine um die Öffnung 03 für das Spiegelglas herumliegende Gehäusepartie 07 mit die Öffnung 03 umgebenden Wandungen 08.

Das erste Gehäuseteil 04 und zumindest eine der die Öffnung 03 umgebenden Wandungen 08 des zweiten Gehäuseteils 05 weisen einander zugewandte, gegenüberliegende einem Gehäuseinnenraum 09 zugewandte Innenseiten 10, 11 auf. Die Wandung 8 ist als Spiegelrahmen ausgebildet und umfasst das Spiegelglas.

An wenigstens einer der einander zugewandten, gegenüberliegenden Innenseiten 10, 11 ist mindestens eine Rippe 12, 13, 14 angeordnet, welche parallel zur Rückseite 02 verläuft und sich frei von der einen Innenseite 10, 11 bis auf einen verbleibenden Spalt 15 annähernd bis zu der gegenüberliegenden Innenseite 11, 10 in den Gehäuseinnenraum 09 erstreckt. Die mindestens eine Rippe 12, 13, 14 kann dabei senkrecht oder unter Einschluss eines beliebigen Winkels auf der entsprechenden Innenseite 10, 11 aufstehen. Auch eine Veränderung des Winkels zwischen Innenwand 10, 11 und der jeweils aufstehenden Rippe 12, 13, 14 ist denkbar. Die mindestens eine Rippe 12, 13, 14 ist vorzugsweise integraler Bestandteil beispielsweise des ersten Gehäuseteils 04. Wenigstens eine Rippe 12, 13, 14 erstreckt sich dabei parallel zur Rückseite über die Innenseite 10, 11 des gesamten Bereichs, in dem die Innenseite 11 wenigstens einer Wandung 08 der Innenseite 10 des ersten Gehäuseteils 04 gegenüberliegt.

Vorzugsweise sind mehrere parallel zueinander versetzt angeordnete Rippen 12, 13, 14 vorgesehen. Dabei können benachbarte, parallel zueinander versetzte Rippen 12, 13, 14 abwechselnd an gegenüberliegenden Innenseiten 10, 11 angeordnet sein.

Am ersten Gehäuseteil 04 und/oder am zweiten Gehäuseteil 05 kann bei Anströmung von einer der Rückseite 02 abgewandten Vorderseite 16 des Außenrückblickspiegelgehäuses 01 aus betrachtet vom vorderen Staupunkt 17 aus gesehen noch vor dem Übergang bzw. der Kante 18 zur die Öffnung 03 für das Spiegelglas aufweisenden Rückseite 02 eine Abrisskante 19 ausgebildet sein. Die Abrisskante 19 trägt neben einer Verringerung der Geräuschentwicklung durch Verkleinerung des Nachlaufs zu einer Verringerung der Verschmutzung des Spiegelglases bei.

Das Außenrückspiegelgehäuse 01 kann eine Wiederholblinkleuchte 20 beherbergen. Das erste Gehäuseteil 04 bildet oder umfasst beispielsweise einen Gehäuseboden 21, wohingegen das zweite Gehäuseteil 05 beispielsweise einen Gehäusedeckel 22 bildet oder umfasst.

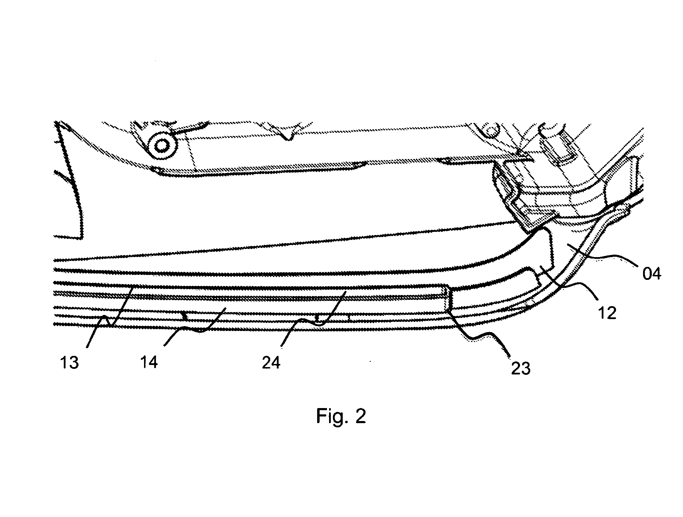

Fig. 2 zeigt den Blick in das untere Gehäuseteil 04. Entlang der sich entlang der Längsachse des Spiegels erstreckenden Kante sind Rippen 12,13 und 14 angebracht. Die beiden äußeren Rippen 13 und 14 bilden einen Innenraum 24, der am Punkt 23 abschließt. An diesem Punkt laufen die beiden Rippen 13 und 14 zusammen und als eine gemeinsame Rippe weiter in Richtung Spiegelfuß. Die Rippen werden gegen ihrer Endes kontinuierlich höher. Dadurch wird die Funktion auch im kritischen Bereich nahe am Fahrzeug erfüllt.

Die Ausführungsform mit den zwei zusammenlaufenden Rippen erfüllt zudem die Forderung, gegebenenfalls den Aufnahmeraum 24 für eine Dichtung zu bilden.

Die Erfindung ist insbesondere im Bereich der Herstellung von Außenrückblickspiegelgehäusen, Außenrückblickspiegeln und Außenrückblickspiegelanordnungen für Kraftfahrzeuge gewerblich anwendbar.

### Bezugszeichenliste

- 01: Außenrückblickspiegelgehäuse
- 02: Rückseite
- 03: Öffnung
- 04: erstes Gehäuseteil
- 05: zweites Gehäuseteil
- 06: Verbindungsstoß
- 07: Gehäusepartie
- 08: Wandung
- 09: Gehäuseinnenraum
- 10: Innenseite
- 11: Innenseite
- 12: Rippe
- 13: Rippe
- 14: Rippe
- 15: Spalt
- 16: Vorderseite
- 17: vorderer Staupunkt
- 18: Kante
- 19: Abrisskante
- 20: Wiederholblinkleuchte
- 21: Gehäuseboden
- 22: Gehäusedeckel
- 23: Punkt der Verbindung
- 24: Zwischenraum

## Patentansprüche

1. Außenrückblickspiegelgehäuse (01), welches zumindest aus einem ersten Gehäuseteil (04) und einem zweiten Gehäuseteil (05) besteht, und welches auf einer Rückseite (02) eine Öffnung (03) für ein Spiegelglas aufweist,
wobei das zweite Gehäuseteil (05) die Öffnung umgebende Wandungen (08) umfasst, wobei das erste Gehäuseteil (04) und zumindest eine der die Öffnung (03) umgebenden Wandungen (08) des zweiten Gehäuseteils (05) einander zugewandte, gegenüberliegende Innenseiten (10, 11) aufweisen, wobei an wenigstens einer Innenseite (10, 11) mindestens eine Rippe (12, 13, 14) angeordnet ist
**dadurch gekennzeichnet, dass** die
mindestens eine Rippe (12, 13, 14) parallel zur Rückseite (02) verläuft und sich von der einen Innenseite (10, 11) bis auf einen Spalt (15) zu der gegenüberliegenden Innenseite (11, 10) erstreckt und in Richtung Spiegelfuß an Höhe gewinnt.

2. Außenrückblickspiegelgehäuse nach Anspruch 1,
**dadurch gekennzeichnet,**
**dass** mindestens eine Rippe (12, 13, 14) an dem ersten Gehäuseteil (04) angeordnet ist.

3. Außenrückblickspiegelgehäuse nach Anspruch 1 oder 2,
**dadurch gekennzeichnet,**
**dass** mehrere parallel zueinander versetzt angeordnete Rippen (12, 13, 14) vorgesehen sind.

4. Außenrückblickspiegelgehäuse nach Anspruch 3,
**dadurch gekennzeichnet, dass** benachbarte, parallel zueinander versetzte Rippen (12, 13, 14) an gegenüberliegenden Innenseiten (10, 11) angeordnet sind.

5. Außenrückblickspiegelgehäuse nach einem der Ansprüche 3 oder 4, **dadurch gekennzeichnet,**
**dass** benachbarte Rippen (12, 13, 14) äquidistant angeordnet sind.

6. Außenrückblickspiegelgehäuse nach einem der Ansprüche 3 oder 4 **dadurch gekennzeichnet,**
**dass** benachbarte Rippen (12, 13, 14) nicht äquidistant angeordnet sind.

7. Außenrückblickspiegelgehäuse nach einem der Ansprüche 3 - 6
**dadurch gekennzeichnet,**
**dass** zwei benachbarte Rippen (13, 14) einen Zwischenraum für die Aufnahme einer Dichtung bilden.

8. Außenrückblickspiegelgehäuse nach einem der vorherigen Ansprüche,
**dadurch gekennzeichnet,**
**dass** das Außenrückblickspiegelgehäuse (01) ein Modul und/oder einen Sensor einer Fahrassistenzvorrichtung und/oder zur Steuerung einer Fahrzeugfunktion beherbergt.

9. Außenrückblickspiegelgehäuse nach einem der vorherigen Ansprüche,
**dadurch gekennzeichnet,**
**dass** das erste Gehäuseteil (04) einen Gehäuseboden (21), und das zweite Gehäuseteil (05) einen Gehäusedeckel (22) umfasst.

10. Außenrückblickspiegelgehäuse nach einem der vorhergehenden Ansprüche,
**dadurch gekennzeichnet,**
**dass** bei Anströmung von einer der Rückseite (02) abgewandten Vorderseite (16) des Außenrückblickspiegelgehäuses (01) aus betrachtet am ersten Gehäuseteil (04) und/oder zweiten Gehäuseteil (05) vom vorderen Staupunkt (17) aus gesehen noch vor dem Übergang (18) zur Rückseite (02) eine Abrisskante (19) ausgebildet ist.

11. Außenrückblickspiegelgehäuse nach Anspruch 10,
**dadurch gekennzeichnet,**
**dass** in wenigstens einem Bereich der Außenoberfläche des Außenrückblickspiegelgehäuses (01) mindestens eine Unebenheit angeordnet ist, in welchem Bereich bei Anströmung von einer der Rückseite (02) abgewandten Vorderseite (16) des Außenrückblickspiegelgehäuses (01) aus betrachtet die Außenströmung verzögert wird und in der Grenzschicht nach vorheriger Druckabnahme ein Druckanstieg folgt.

12. Außenrückblickspiegel umfassend ein Außenrückblickspiegelgehäuse (01), welches zumindest einen einem an einem Kraftfahrzeug angeordneten Spiegelfuß zugeordneten Grundträger beherbergt,
**gekennzeichnet durch**
ein Außenrückblickspiegelgehäuse (01) nach einem der vorhergehenden Ansprüche.

13. Außenrückblickspiegelanordnung für ein Kraftfahrzeug, umfassend einen an dem Kraftfahrzeug angeordneten Spiegelfuß, der gegebenenfalls mittels einer Spiegelfußabdeckung verkleidet ist, und einem an dem Spiegelfuß angeordneten Außenrückblickspiegel,
**gekennzeichnet durch**
einen Außenrückblickspiegel gemäß Anspruch 12.

## Claims

1. A casing (01) of an external rear view mirror, which casing (01) consists of at least a first casing part (04) and a second casing part (05) and has on a back (02) an opening (03) for a mirror glass, wherein the second casing part (05) comprises walls (08) that surround said opening, wherein the first casing part (04) and at least one of the walls (08) of the second casing part (05) that surround the opening (03) have opposing inner surfaces (10, 11) that face each other, wherein at least one rib (12, 13, 14) is arranged on at least one inner surface (10, 11),
**characterized in that**
the at least one rib (12, 13, 14) extends parallel to the back (02) and extends from the one inner surface (10, 11) to the opposite inner surface (11, 10) except for a gap (15) and gains in height toward the foot of the mirror.

2. A casing of an external rear view mirror according to claim 1,
**characterized in that**
at least one rib (12, 13, 14) is arranged on the first casing part (04).

3. A casing of an external rear view mirror according to claim 1 or 2,
**characterized in that**
several ribs (12, 13, 14) are provided that are offset in parallel to each other.

4. A casing of an external rear view mirror according to claim 3,
**characterized in that**
adjacent ribs (12, 13, 14) that are offset in parallel to each other are arranged on opposing inner surfaces (10, 11).

5. A casing of an external rear view mirror according to any one of claims 3 or 4,
**characterized in that**
adjacent ribs (12, 13, 14) are arranged equidistantly.

6. A casing of an external rear view mirror according to any one of claims 3 or 4,
**characterized in that**
adjacent ribs (12, 13, 14) are not arranged equidistantly.

7. A casing of an external rear view mirror according to any one of claims 3 to 6,
**characterized in that**
two adjacent ribs (13, 14) form a gap for accommodating a seal.

8. A casing of an external rear view mirror according to any one of the preceding claims,
**characterized in that**
the casing (01) of the external rear view mirror accommodates a module and/or a sensor of a driver assistance device and/or for controlling a vehicle function.

9. A casing of an external rear view mirror according to any one of the preceding claims,
**characterized in that**
the first casing part (04) comprises a casing bottom (21) and the second casing part (05) comprises a casing cover (22).

10. A casing of an external rear view mirror according to any one of the preceding claims,
**characterized in that**
when there is a flow as viewed from a front (16) of the casing (01) of the external rear view mirror, a stall edge (19) is formed on the first casing part (04) and/or second casing part (05) as viewed from the front stagnation point (17) and still before the point of transition (18) to the back (02), said front (16) facing away from the back (02).

11. A casing of an external rear view mirror according to claim 10,
**characterized in that**
at least one unevenness is arranged in at least one region of the outer surface of the casing (01) of the external rear view mirror, in which region, when there is a flow as viewed from a front (16) of the casing (01) of the external rear view mirror, the external flow is retarded and the pressure increases in the boundary layer after a previous decrease of pressure, said front (16) facing away from the back (02).

12. An external rear view mirror comprising a casing (01) of an external rear view mirror, which casing (01) accommodates at least one base support that is associated to a mirror foot that is arranged on a motor vehicle,
**characterized by**
a casing (01) of an external rear view mirror according to any one of the preceding claims.

13. An external rear view mirror arrangement for a motor vehicle comprising a mirror foot arranged on the motor vehicle, which mirror foot is possibly covered by means of a mirror foot cover, and an external rear view mirror arranged on the mirror foot,
**characterized by**
an external rear view mirror according to claim 12.

## Revendications

1. Boîtier de rétroviseur extérieur (01), constitué d'au moins une première partie de boîtier (04) et une deuxième partie de boîtier (05), et comportant une ouverture (03) destinée à un miroir sur un côté arrière (02), de sorte que la deuxième partie de boîtier (05) comprend des parois (08) entourant l'ouverture, de sorte que la première partie de boîtier (04) et au moins une des parois (08) entourant l'ouverture (03) de la deuxième partie de boîtier (05) définissent ensemble des surfaces intérieures opposées en vis-à-vis (10, 11), de sorte qu'au moins une nervure (12, 13, 14) est agencée sur au moins une surface intérieure (10, 11)
**caractérisé en ce que**
la au moins une nervure (12, 13, 14) s'étend parallèlement au côté arrière (02), et de la première surface intérieure (10, 11) vers la surface intérieure opposée (11, 10), en définissant un espace (15), avec une hauteur qui augmente dans la direction d'un pied de rétroviseur.

2. Boîtier de rétroviseur extérieur selon la revendication 1,
**caractérisé en ce que**
la au moins une nervure (12, 13, 14) est agencée sur la première partie de boîtier (04).

3. Boîtier de rétroviseur extérieur selon les revendications 1 ou 2,
**caractérisé en ce que**
plusieurs nervures (12, 13, 14) sont prévues, agencées parallèles et étagées les unes par rapport aux autres.

4. Boîtier de rétroviseur extérieur selon la revendication 3,
**caractérisé en ce que**
les nervures voisines parallèles et étagées les unes par rapport aux autres (12, 13, 14) sont agencées sur les surfaces intérieures opposées (10, 11).

5. Boîtier de rétroviseur extérieur selon l'une quelconque des revendications précédentes,
**caractérisé en ce que**
les nervures voisines (12, 13, 14) sont agencées de manière équidistante.

6. Boîtier de rétroviseur extérieur selon l'une quelconque des revendications précédentes,
**caractérisé en ce que**
les nervures voisines (12, 13, 14) ne sont pas agencées de manière équidistante.

7. Boîtier de rétroviseur extérieur selon l'une quelconque des revendications précédentes,
**caractérisé en ce que** deux nervures voisines (13, 14) forment un jeu destiné à accueillir un joint d'étanchéité.

8. Boîtier de rétroviseur extérieur selon l'une quelconque des revendications précédentes,
**caractérisé en ce que**
le boîtier de rétroviseur extérieur (01) reçoit un module et/ou un capteur d'un dispositif d'assistance à la conduite et/ou pour commander une fonction de véhicule.

9. Boîtier de rétroviseur extérieur selon l'une quelconque des revendications précédentes,
**caractérisé en ce que**
la première partie de boîtier (04) comprend une base de boîtier (21), et la deuxième partie de boîtier (05) comprend un recouvrement de boîtier (22).

10. Boîtier de rétroviseur extérieur selon l'une quelconque des revendications précédentes,
**caractérisé en ce que**
en considérant un écoulement entrant depuis un côté avant (16) du boîtier de rétroviseur extérieur (01) dirigé à l'opposé du côté arrière(02), un bord de séparation (19) est formé sur la première partie de boîtier (04) et/ou la deuxième partie de boîtier (05), vu depuis le point de stagnation avant (17), avant la transition (18) vers le côté arrière (02).

11. Boîtier de rétroviseur extérieur selon la revendication 10,
**caractérisé en ce que**
au moins dans un secteur de la surface extérieure du boîtier de rétroviseur extérieur (01) est agencée au moins une saillie, secteur dans lequel, en considérant un écoulement entrant depuis un côté avant (16) du boîtier de rétroviseur extérieur (01) dirigé à l'opposé du côté arrière (02), l'écoulement sortant va se déformer, et une augmentation de pression va intervenir dans la couche limite après la diminution de pression.

12. Rétroviseur comprenant un boîtier de rétroviseur extérieur (01), qui reçoit au moins un support de base associé à un pied de rétroviseur disposé sur un véhicule automobile,
**caractérisé par**
un boîtier de rétroviseur extérieur (01) selon l'une quelconque des revendications précédentes.

13. Agencement de rétroviseur extérieur pour un véhicule automobile, comprenant un pied de rétroviseur disposé sur un véhicule automobile, qui est recouvert le cas échéant d'un recouvrement de pied de rétroviseur, et un rétroviseur agencé sur le pied de rétroviseur,
**caractérisé par**
un rétroviseur selon la revendication 12.
